(19) Europäisches Patentamt
European Patent Office
Office européen des brevets

(11) EP 3 527 619 B1

(12) EUROPEAN PATENT SPECIFICATION

(45) Date of publication and mention of the grant of the patent:
**14.12.2022 Bulletin 2022/50**

(21) Application number: **19166866.4**

(22) Date of filing: **03.04.2015**

(51) International Patent Classification (IPC):
***C08K 5/103*** *(2006.01)* ***C08L 67/02*** *(2006.01)*
***C08J 5/18*** *(2006.01)*

(52) Cooperative Patent Classification (CPC):
(C-Sets available)
**B32B 27/36; B32B 17/10605; B32B 17/10688; B32B 17/10761; B32B 27/08; B32B 27/22; B32B 27/306; C08J 5/18; C08K 5/103; C08L 29/14; C08L 67/02;** B32B 2307/102; C08J 2329/14 (Cont.)

# (54) POLYVINYL ACETAL COMPOSITION

POLYVINYLACETALZUSAMMENSETZUNG

COMPOSITION D'ACÉTAL DE POLYVINYLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.04.2014 JP 2014077970**
**04.04.2014 JP 2014077971**
**27.03.2015 JP 2015067227**

(43) Date of publication of application:
**21.08.2019 Bulletin 2019/34**

(62) Document number(s) of the earlier application(s) in accordance with Art. 76 EPC:
**15773466.6 / 3 127 961**

(73) Proprietor: **Kuraray Europe GmbH**
**65795 Hattersheim am Main (DE)**

(72) Inventors:
- **Asanuma, Yoshiaki**
**Kurashiki-shi**
**Okayama 713-8550 (JP)**
- **Kusudou, Takeshi**
**Kurashiki-shi**
**Okayama 713-8550 (JP)**

(74) Representative: **Müller-Boré & Partner Patentanwälte PartG mbB**
**Friedenheimer Brücke 21**
**80639 München (DE)**

(56) References cited:
**JP-A- 2010 059 009 US-A1- 2009 305 058**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 527 619 B1

(52) Cooperative Patent Classification (CPC): (Cont.)

C-Sets
**C08K 5/103, C08L 29/14;**
**C08L 29/14, C08L 67/02, C08K 5/103**

## Description

### Technical Field

The present invention relates to compositions containing polyvinyl acetal, and to a sheet made from the compositions, and use thereof.

### Background Art

Polyvinyl acetals such as polyvinyl butyral have desirable adhesion or compatibility for organic and inorganic base materials, and desirable solubility in organic solvents, and have been widely used as various types of adhesives, binders for ceramics, inks, coating materials, and an intermediate film for laminated glass.

There have been studies of various functional intermediate films for laminated glass, and, particularly, sound-insulation intermediate films for laminated glass have been actively studied out of the growing demand in the market. There is a wide range of studies conducted for such sound-insulation intermediate films for laminated glass, including a multilayer sound-insulation intermediate film having a layer of a polyvinyl acetal containing a relatively small amount of residual hydroxyl group mixed with a large amount of plasticizer, and a layer of a polyvinyl acetal containing a relatively large amount of residual hydroxyl group mixed with a moderate amount of plasticizer (for example, PTL 1). A problem of such an intermediate film, however, is that the trims and the off-spec products that generated in the production contain polyvinyl acetals that differ in the amount of residual hydroxyl group, and that the film cannot be easily recycled into a transparent intermediate film because such polyvinyl acetals are not homogenously compatible with each other.

Sound-insulation intermediate films for laminated glass intended to solve the recycle issue have been proposed, such as a single-layer sound-insulation intermediate film for laminated glass containing a relatively large amount of plasticizer in polyvinyl acetal. Such an intermediate film contains a relatively larger amount of plasticizer than common intermediate films for laminated glass, and accordingly the surface is adherent (for example, PTL 2) . Because of this, blocking (autohesion) occurs when the film is stored in temperatures near room temperature, and the film is stored at low temperature (for example, 5°C or less) to prevent this. However, this is problematic as it may cause the plasticizer to bleed. A method is available that is intended to solve this problem with the use of a plasticizer compound having desirable compatibility with polyvinyl acetal. However, such a compound is highly hydrophilic, and becomes easily extracted when the intermediate film for laminated glass contacts water. Extraction of the plasticizer may cause problems, and further improvements are needed.

### Citation List

#### Patent Literature

PTL 1: JP-A-2007-331959
PTL 2: JP-A-2007-008798

US 2009/305058 describes an interlayer film for a glass laminate and a glass laminate. JP 2010 059009 A describes an intermediate film for laminated glasses.

### Summary of Invention

#### Technical Problem

An object of the present invention is to provide a polyvinyl acetal composition that does not involve bleeding of a plasticizer even when stored at low temperatures, or cause problems due to extraction of a component even when brought into contact with water, and that develops desirable sound insulation performance when used as an intermediate film for laminated glass.

#### Solution to Problem

The present invention achieves the foregoing object by providing the embodiments as characterized in claims 1 to 14.

Advantageous Effects of Invention

The present invention can provide a polyvinyl acetal composition that does not involve bleeding of a plasticizer even when stored at low temperatures, or cause problems due to extraction of a component even when brought into contact with water, and that develops desirable sound insulation performance when used as an intermediate film for laminated glass.

Description of Embodiments

The polyester-based alcohol compound is described first.

The polyester-based alcohol compound is a compound having a polyester structure, and at least one hydroxyl group per molecule. Examples of such compounds include a polyester-based alcohol compound as a condensation polymer of a polyvalent carboxylic acid and a polyhydric alcohol (hereinafter, referred to as "condensation polymerization polyester-based alcohol compound"), a polyester-based alcohol compound as a polymer of a hydroxycarboxylic acid or a lactone compound (hereinafter, referred to as "hydroxycarboxylic acid polyester-based alcohol compound"), and a polyester-based alcohol compound as a condensation polymer of a carbonate compound and a polyhydric alcohol (hereinafter, referred to as "polyester carbonate-based alcohol compound"). The following describes these compounds, in order.

The condensation polymerization polyester-based alcohol compound is obtained through condensation polymerization of a polyvalent carboxylic acid and a polyhydric alcohol in the presence of excess polyhydric alcohol. Examples of the polyvalent carboxylic acid include, but are not limited to, aliphatic dicarboxylic acids such as succinic acid, glutaric acid, adipic acid, suberic acid, sebacic acid, dodecanedioic acid, and 1,2-cyclohexane dicarboxylic acid; aliphatic tricarboxylic acids such as 1,2,3-propanetricarboxylic acid, and 1,3,5-pentanetricarboxylic acid; aromatic dicarboxylic acids such as phthalic acid, and terephthalic acid; and aromatic tricarboxylic acids such as trimellitic acid. Preferred are aliphatic dicarboxylic acids of 4 to 12 carbon atoms, preferably aliphatic dicarboxylic acids of 5 to 10 carbon atoms, more preferably aliphatic dicarboxylic acids of 6 to 8 carbon atoms for their desirable properties including the desirable heat resistance of the product polyester, desirable compatibility with polyvinyl acetal, and a desirable plasticizing effect for polyvinyl acetal. Examples of the polyhydric alcohol include, but are not limited to, aliphatic diols such as ethylene glycol, 1,2-propanediol, 1,3-propanediol, 1,2-butanediol, 1,3-butanediol, 1,4-butanediol, 1,2-hexanediol, 3-methyl-1,5-pentanediol, 1,2-octanediol, 1,2-nonanediol, 1,8-nonanediol, 1,9-nonanediol, 1,2-cyclohexanediol, 1,2-cyclohexane dimethanol, 1,4-cyclohexane dimethanol, diethylene glycol, and triethylene glycol; aliphatic triols such as glycerine; and aliphatic tetraols such as erythritol, and pentaerythritol. Preferred are aliphatic diols of 2 to 12 carbon atoms, preferably aliphatic diols of 3 to 10 carbon atoms, more preferably aliphatic diols of 4 to 8 carbon atoms in terms of improving the weather resistance of the condensation polymerization polyester-based alcohol compound, compatibility with polyvinyl acetal, and compatibility between polyvinyl acetal and the diester compound. The combination of the polyvalent carboxylic acid and the polyhydric alcohol is not particularly limited. However, in terms of compatibility with polyvinyl acetal, the preferred combination is one in which the number of carbon atoms per molecule of the polyvalent carboxylic acid, and the number of carbon atoms per molecule of the polyhydric alcohol are total 10 to 20, preferably 10 to 16, more preferably 10 to 14.

Specific examples of the condensation polymerization polyester-based alcohol compound used in the present invention include, but are not limited to, polyester diols obtained through condensation polymerization of adipic acid and 3-methyl-1,5-pentanediol; polyester diols obtained through condensation polymerization of sebacic acid and 3-methyl-1,5-pentanediol; and polyester diols obtained through condensation polymerization of adipic acid and 1,8-nonanediol.

The condensation polymerization polyester-based alcohol compound may be produced by using conventionally known methods. For example, a polyvalent carboxylic acid and a polyhydric alcohol are dissolved in a suitable solvent, as required, and an appropriate amount of catalyst is added to promote a condensation polymerization reaction. Examples of the catalyst include inorganic acids such as hydrochloric acid, sulfuric acid, nitric acid, and phosphoric acid; organic acids such as trifluoroacetic acid, and para-toluenesulfonic acid; titanium compounds such as titanic acid, tetraalkoxy titanium, and titanium tetracarboxylate; Lewis acids such as tin compounds; inorganic bases such as sodium hydroxide, and potassium hydroxide; and organic bases such as triethylamine, pyridine, 1,8-diazabicyclo[5.4.0]-7-undecene, and sodium acetate. Water that generates during the reaction may be evaporated, and the reaction temperature may be appropriately varied. After the reaction, the catalyst is deactivated to obtain the condensation polymerization polyester-based alcohol compound. The molar ratio of the polyvalent carboxylic acid and the polyhydric alcohol is typically 100/100.5 to 100/150, more preferably 100/101 to 100/115.

The hydroxycarboxylic acid polyester-based alcohol compound is obtained through condensation polymerization of hydroxycarboxylic acid. Examples of the hydroxycarboxylic acid include glycolic acid, lactic acid, 2-hydroxybutanoic acid, 3-hydroxybutanoic acid, 4-hydroxybutanoic acid, 6-hydroxyhexanoic acid, and ricinoleic acid. A lactone compound in which these hydroxycarboxylic acids are condensed within the molecule also may be used as feedstock. Examples of such lactone compounds include, but are not limited to, β-butyrolactone, δ-valerolactone, ε-caprolactone, and 4-methyl-δ-valerolactone. When using a lactone compound, the hydroxycarboxylic acid polyester-based alcohol compound may be obtained through ring-opening polymerization. Preferred as the hydroxycarboxylic acid or the lactone compound is a hydroxycarboxylic acid or a lactone compound of 6 to 10 carbon atoms in terms of the heat resistance of the polyester-based alcohol compound, compatibility with polyvinyl acetal, and the plasticizing effect. Particularly preferred is 6-hydroxycarboxylic acid, or ε-caprolactone.

Aside from the hydroxycarboxylic acids and the lactone compounds, the hydroxycarboxylic acid polyester-based alcohol compound used in the present invention may use monohydric alcohols or polyhydric alcohols as feedstock. Useable as the monohydric alcohols are, for example, methanol, ethanol, butanol, isobutanol, hexanol, 2-ethyl-1-butanol, and 2-ethyl-1-hexanol. The polyhydric alcohols may be the same polyhydric alcohols exemplified above as the possible feedstock of the condensation polymerization polyester-based alcohol compound.

Specific examples of the hydroxycarboxylic acid polyester-based alcohol compound used in the present invention include, but are not limited to, poly ε-caprolactone diols obtained through addition ring-opening polymerization of ethylene glycol with ε-caprolactone; poly ε-caprolactone diols obtained through addition ring-opening polymerization of propylene glycol with ε-caprolactone; and poly ε-caprolactone diols obtained through addition ring-opening polymerization of 3-methyl-1,5-pentanediol with ε-caprolactone.

The hydroxycarboxylic acid polyester-based alcohol compound may be produced by using conventionally known methods. Specifically, a hydroxycarboxylic acid, a lactone compound, and optionally a monohydric alcohol or a polyhydric alcohol are dissolved in a suitable solvent, as required, and an appropriate amount of catalyst is added to promote reaction. Examples of the catalyst include inorganic acids such as hydrochloric acid, sulfuric acid, nitric acid, and phosphoric acid; organic acids such as trifluoroacetic acid, and para-toluenesulfonic acid; titanium compounds such as titanic acid, tetraalkoxy titanium, and titanium tetracarboxylate; Lewis acids such as tin compounds; inorganic bases such as sodium hydroxide, and potassium hydroxide; and organic bases such as triethylamine, pyridine, 1,8-diazabicyclo[5.4.0]-7-undecene, and sodium acetate. Water that generated during the reaction may be evaporated, and the reaction temperature may be appropriately varied. After the reaction, the catalyst is deactivated to obtain the hydroxycarboxylic acid polyester-based alcohol compound.

The polyester carbonate-based alcohol compound is obtained through condensation polymerization of a polyhydric alcohol and a carbonate ester compound in the presence of excess polyhydric alcohol. The polyhydric alcohol may be the same polyhydric alcohol exemplified above as the feedstock of the condensation polymerization polyester-based alcohol compound. Preferably, the polyhydric alcohol is a polyhydric alcohol of 2 to 12 carbon atoms, preferably a polyhydric alcohol of 4 to 10 carbon atoms, further preferably a polyhydric alcohol of 6 to 8 carbon atoms in terms of compatibility with polyvinyl acetal, and the plasticizing effect. Examples of the carbonate ester compound include ethylene carbonate, diethyl carbonate, and diphenyl carbonate.

Specific examples of the polyester carbonate-based alcohol compound used in the present invention include, but are not limited to, polycarbonate diols obtained through reaction of 3-methyl-1,5-pentanediol and diethyl carbonate.

The polyester carbonate-based alcohol compound may be produced by using conventionally known methods. Specifically, a polyhydric alcohol and a carbonate ester compound are dissolved in a suitable solvent, as required, and an appropriate amount of catalyst is added to promote a condensation polymerization reaction. Examples of the catalyst include inorganic acids such as hydrochloric acid, sulfuric acid, nitric acid, and phosphoric acid; organic acids such as trifluoroacetic acid, and para-toluenesulfonic acid; titanium compounds such as titanic acid, tetraalkoxy titanium, and titanium tetracarboxylate; Lewis acids such as tin compounds; inorganic bases such as sodium hydroxide, and potassium hydroxide; and organic bases such as triethylamine, pyridine, 1,8-diazabicyclo[5.4.0]-7-undecene, and sodium acetate. An alcohol that generated in the ester exchange reaction of the carbonate ester compound and the polyhydric alcohol may be evaporated during the reaction, and the reaction temperature may be appropriately varied. After the reaction, the catalyst is deactivated to obtain the polyester carbonate-based alcohol compound.

The hydroxyl number of the compound (I) used in the present invention is not particularly limited, and is preferably 15 to 450 mgKOH/g, more preferably 50 to 350 mgKOH/g. The hydroxyl number is preferably 80 to 330 mgKOH/g in terms of compatibility between the polyvinyl acetal and the compound (I) contained in the composition of the present invention, and compatibility between the polyvinyl acetal and the diester compound (II). The hydroxyl number of the compound (I) used in the present invention is determined according to JIS K1557-1.

The number average molecular weight based on the hydroxyl number of compound (I) is not particularly limited, and is preferably 200 to 2,500, more preferably 300 to 1,500, further preferably 400 to 1,000. In these ranges of the number average molecular weight based on hydroxyl number, the compound (I) becomes unlikely to vaporize during a long use of the composition of the present invention, and the compatibility with polyvinyl acetal, and the plasticizing effect for polyvinyl acetal become desirable. The number average molecular weight based on hydroxyl number is a value obtained as (the number of hydroxyl groups per molecule of compound (I))/(the mass of hydroxyl group per gram of compound (I) [mol/g]) = 1,000 × (the number of hydroxyl groups per molecule of compound (I))/((the hydroxyl number of compound (I))/56).

When the content of the compound (I) with respect to 100 parts by mass of the polyvinyl acetal in the composition

of the present invention is X parts by mass, X is 3 to 100, preferably 5 to 80, further preferably 7 to 50, particularly preferably 7 to 40, even more preferably 7 to 35, most preferably 7 to 30. Note that the upper limits and the lower limits of these ranges are preferred values, and may be freely combined. The same applies to the other numerical ranges specified in this specification. When X is less than 3, the components may bleed when the composition of the present invention is handled at low temperatures (for example, 5°C or less), or the sound insulation performance may become insufficient when the composition of the present invention is used as an intermediate film for laminated glass. On the other hand, when X is larger than 100, extraction of a component may occur when the composition of the present invention is brought into contact with water.

The following describes the diester compound (II) contained in the composition of the present invention. The diester compound (II) is selected from compounds represented by the formula 1 below. The diester compound (II) has a good balance between compatibility with polyvinyl acetal, and the plasticizing effect for polyvinyl acetal, and makes the composition less absorbent of water so that extraction becomes less likely to occur even when the composition contacts water. This provides an effect that reduces the property changes as might occur when the composition of the present invention is used for extended time periods.

[Chem. 1]

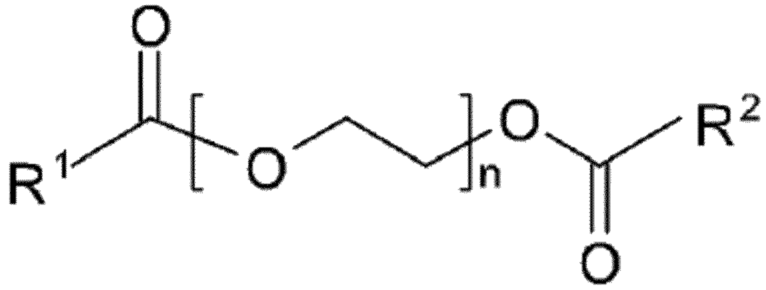

(Formula 1)

In formula 1, $R^1$ and $R^2$ each independently represent a C5 to C16 organic group that may have an ether bond, and n is 1 to 10.

Preferably, $R^1$ and $R^2$ each independently represent a hydrocarbon group of 5 to 16 carbon atoms, or a group containing an ether bond of a structure with an oxygen atom inserted in the carbon-carbon bond of the hydrocarbon group, more preferably an alkyl group of 5 to 16 carbon atoms, or a group containing an ether bond of a structure with an oxygen atom inserted in the carbon-carbon bond of the alkyl group. Examples of $R^1$ and $R^2$ include a pentyl group, a 3-pentyl group, a hexyl group, a heptyl group, a 3-heptyl group, an octyl group, a cyclohexyl group, a decyl group, and a group containing an ether bond of a structure with an oxygen atom inserted in the carbon-carbon bond of these groups (for example, a butoxymethyl group). More preferably, $R^1$ and $R^2$ are organic groups of 7 to 11 carbon atoms, further preferably organic groups of 7 to 8 carbon atoms. Preferably, n is 3 to 8, more preferably 3 to 4. Specific examples of such diester compounds (II) include triethylene glycol di-2-ethylhexanoate (3G8), tetraethylene glycol di-2-ethylhexanoate (4G8), and triethylene glycol didecanoate, of which 3G8 and 4G8 are more preferred, and 3G8 is optimal because 3G8 is readily available at low cost, and has a desirable plasticizing effect for polyvinyl acetal, and good compatibility with polyvinyl acetal.

The diester compound (II) has a good balance between compatibility with polyvinyl acetal, and the plasticizing effect for polyvinyl acetal. However, the diester compound (II) may cause bleeding when a composition containing polyvinyl acetal and a relatively large amount of diester compound (II) is handled at low temperatures (for example, 5°C or less). Because the composition of the present invention contains the compound (I) as an essential component, such low-temperature bleeding is less likely to occur in the composition of the present invention, even when the diester compound (II) is contained in relatively large amounts.

When the content of the diester compound (II) with respect to 100 parts by mass of the polyvinyl acetal is Y parts by mass in the composition of the present invention, Y is 5 to 60, preferably 10 to 55, further preferably 20 to 50. When Y is less than 5, the sound insulation performance may become insufficient when the composition of the present invention is used as an intermediate film for laminated glass. On the other hand, when Y is larger than 60, the components may bleed when the composition of the present invention is stored at low temperatures (for example, 5°C or less)

In the composition of the present invention, it is preferable that X < Y. More preferably, X < Y, and the difference between X and Y is larger than 5. Further preferably, the difference between X and Y is larger than 10. When X is equal

to or greater than Y, extraction of a component may occur when the composition of the present invention is brought into contact with water, or the sound insulation performance may not develop sufficiently when the composition of the present invention is used as an intermediate film for laminated glass.

In the composition of the present invention, X + Y = 42 to 120, preferably X + Y = 44 to 100, more preferably X + Y = 46 to 85. When X + Y is less than 42, the sound insulation performance may become insufficient when the composition of the present invention is used as an intermediate film for laminated glass. When X + Y is above 120, the mechanical strength of the composition of the present invention may become insufficient.

When the composition of the present invention is produced by using a melt kneader such as an extruder, it is preferable to supply a mixture of the compound (I) and the diester compound (II) to the extruder. By supplying the compound (I) and the diester compound (II) to the extruder in the form of a homogenous mixture, these compounds can be supplied to the extruder in stable proportions. For example, a mixture of X parts by mass of the plasticizer compound, and Y parts by mass of the diester compound (II) is preferably a homogenous liquid at 80°C, more preferably a homogenous liquid at 20°C, particularly preferably a homogenous solution at 0°C. The mixture is preferably a homogenous liquid at 80°C because such a mixture can be supplied to an extruder in stable proportions at 80°C or higher temperatures.

The composition of the present invention has a weight loss of preferably less than 2 mass%, more preferably less than 1 mass%, further preferably less than 0.6 mass% as measured when the composition is molded into a sheet measuring 5 cm in length, 5 cm in width, and 0.8 mm in thickness, and dipped in 92.5°C ± 0.5°C hot water for 2 hours. When the weight loss exceeds 2 mass%, the components contained in the composition of the present invention may become extracted in water, and bubbles may be generated at end portions of laminated glass, or detachment may occur between the glass and the intermediate film when the intermediate film for laminated glass contacts water during a long use of laminated glass containing the composition of the present invention as an intermediate film for laminated glass in an outdoor environment. Bleeding of the diester compound (II) may also occur when the composition is exposed to low temperature after such extraction has occurred.

The following describes the polyvinyl acetal contained in the composition of the present invention. The polyvinyl acetal used in the present invention is typically produced using a polyvinyl alcohol as feedstock. The polyvinyl alcohol can be obtained by using conventionally known techniques, specifically by polymerizing a carboxylic acid vinyl ester compound such as vinyl acetate, and saponifying the resulting polymer. The polymerization of a carboxylic acid vinyl ester compound may be achieved by using conventionally known methods, such as solution polymerization, bulk polymerization, suspension polymerization, and emulsification polymerization. The polymerization initiator may be appropriately selected according to the polymerization method, and, for example, an azo-based initiator, a peroxide-based initiator, and a redox-based initiator may be used. The saponification reaction may be performed by using, for example, alcoholysis or hydrolysis using conventionally known alkali catalysts or acid catalysts.

The polyvinyl alcohol may be a saponification product of a copolymer obtained through copolymerization of a carboxylic acid vinyl ester compound and other monomer, provided that it does not work against the gist of the present invention. Examples of such other monomers include, but are not limited to, α-olefins such as ethylene, propylene, n-butene, and isobutylene; acrylic acid esters such as methyl acrylate, ethyl acrylate, n-butyl acrylate, i-butyl acrylate, t-butyl acrylate, 2-ethylhexyl acrylate, dodecyl acrylate, and octadecyl acrylate; methacrylic acid esters such as methyl methacrylate, ethyl methacrylate, n-butyl methacrylate, i-butyl methacrylate, t-butyl methacrylate, 2-ethylhexyl methacrylate, dodecyl methacrylate, and octadecyl methacrylate; acrylamides and derivatives thereof, such as acrylamide, N-methylacrylamide, N-ethylacrylamide, N,N-dimethylacrylamide, diacetone acrylamide, acrylamide propanesulfonic acid and salts thereof, acrylamide propyldimethyl amine and salts and quaternary salts thereof, and N-methylolacrylamide and derivatives thereof; methacrylamides and derivatives thereof, such as methacrylamide, N-methylmethacrylamide, N-ethylmethacrylamide, methacrylamide propanesulfonic acid and salts thereof, methacrylamide propyldimethyl amine and salts and quaternary salts thereof, and N-methylolmethacrylamide and derivatives thereof; vinyl ethers such as methyl vinyl ether, ethyl vinyl ether, n-butyl vinyl ether, i-butyl vinyl ether, t-butyl vinyl ether, dodecyl vinyl ether, and stearyl vinyl ether; nitriles such as acrylonitrile, and methacrylonitrile; halogenated vinyl such as vinyl chloride, and vinyl fluoride; halogenated vinylidene such as vinylidene chloride, and vinylidene fluoride; allyl compounds such as allyl acetate, and allyl chloride; vinyl silyl compounds such as maleic acid esters or maleic acid anhydrides, and vinyl trimethoxysilane; and isopropenyl acetate. When copolymerizing these monomers, the monomer is typically used in a proportion of less than 10 mol% with respect to the carboxylic acid vinyl ester compound.

The viscosity average degree of polymerization of the polyvinyl alcohol as feedstock of the polyvinyl acetal used in the present invention is not particularly limited, and may be appropriately selected according to use. Preferably, the viscosity average degree of polymerization of the polyvinyl alcohol is 150 to 3,500, more preferably 200 to 2,500, further preferably 1,500 to 2,500. The mechanical strength of the composition of the present invention may become insufficient when the viscosity average degree of polymerization is less than 150. Above 3,500, the solubility in a solvent, or the processibility of melting may suffer.

The polyvinyl acetal used in the present invention may be obtained, for example, as follows. However, the method is not limited to the following. First, a 3 to 30 mass% polyvinyl alcohol aqueous solution is maintained in a

temperature range of 80 to 100°C, and is allowed to cool over a time period of 10 to 60 minutes. An aldehyde and an acid catalyst are added upon the temperature dropping to - 10 to 30°C, and an acetalization reaction is performed at the maintained temperature for 30 to 300 minutes. The reaction liquid is then raised to a temperature of 20 to 80°C over a time period of 30 to 200 minutes, and the temperature is maintained for 30 to 300 minutes. Thereafter, the reaction liquid is neutralized by adding a neutralizing agent such as an alkali, as required, and the resin is water washed, and dried to obtain the polyvinyl acetal used in the present invention.

The acid catalyst used in the acetalization reaction is not particularly limited, and may be an organic acid or an inorganic acid. Examples of the acid catalyst include acetic acid, para-toluenesulfonic acid, nitric acid, sulfuric acid, and hydrochloric acid. Preferred are hydrochloric acid, sulfuric acid, and nitric acid.

The aldehyde used in the acetalization reaction is not particularly limited, and is preferably an aldehyde of 1 to 8 carbon atoms. Examples of aldehydes of 1 to 8 carbon atoms include formaldehyde, acetaldehyde, propionaldehyde, n-butyraldehyde, isobutyraldehyde, n-hexylaldehyde, 2-ethylbutyraldehyde, n-octylaldehyde, 2-ethylhexylaldehyde, and benzaldehyde. These may be used alone or in a combination of two or more. Preferred for use are aldehydes of 2 to 5 carbon atoms, particularly aldehydes of 4 carbon atoms, such as n-butyraldehyde, and isobutyraldehyde because of advantages including easy availability, easy removability of residual aldehydes by water washing and drying after the acetalization reaction, and the desirable mechanical characteristics of the product polyvinyl acetal.

The average amount of residual hydroxyl group in the polyvinyl acetal used in the present invention is 15 to 50 mol%, preferably 17 to 42 mol%, more preferably 23 to 35 mol%, further preferably 23 to 33 mol%, particularly preferably 25 to 33 mol%, most preferably 26 to 33 mol%. When the average amount of residual hydroxyl group is less than 15 mol%, the mechanical strength of the composition of the present invention may become insufficient, or compatibility with the compound (I) or the diester compound (II) may suffer. Above 50 mol%, the composition of the present invention may become more absorbent of water, or compatibility with the compound (I) or the diester compound (II) may suffer.

The average degree of acetalization of the polyvinyl acetal used in the present invention is not particularly limited, and is preferably 40 to 84 mol%, more preferably 45 to 80 mol%, further preferably 50 to 76 mol%, particularly preferably 60 to 74 mol%, even more preferably 66 to 73 mol%. A polyvinyl acetal with an average degree of acetalization of the polyvinyl acetal of less than 40 mol% is not preferable in terms of compatibility with the compound (I) or the diester compound (II) . A polyvinyl acetal with an average degree of acetalization of above 84 mol% is difficult to produce at low cost in industrial settings, and the mechanical strength of the product composition may suffer.

The average amount of residual vinyl ester group of the polyvinyl acetal used in the present invention is not particularly limited, and is preferably 0.1 to 15 mol%, more preferably 0.1 to 10 mol%, further preferably 0.1 to 5 mol%. A polyvinyl acetal with an average amount of residual vinyl ester group of less than 0.1 mol% is difficult to produce at low cost in industrial settings. A polyvinyl acetal with an average amount of residual vinyl ester group of above 15 mol% may become cosmetically unappealing as it colors during a long use.

The composition of the present invention may further contain known additives, such as plasticizers, antioxidants, ultraviolet absorbers, and other additives, provided that such addition is not detrimental to the effects of the present invention.

An adhesion improver (adhesion adjuster) may be added when the composition of the present invention is used in applications such as an intermediate film for laminated glass where the composition is adjusted to have appropriate adhesion for glass. The adhesion improver may be a conventionally known adhesion improver, including, for example, alkali metal salts and alkali-earth metal salts such as sodium acetate, potassium acetate, magnesium acetate, and magnesium butyrate. The addition amount of adhesion improver is not particularly limited, and may be adjusted so that, for example, the pummel value obtained in a pummel test becomes suited for the intended purpose.

The composition of the present invention is obtained by mixing the polyvinyl acetal, the compound (I), the diester compound (II), and, as required, other components, using a conventionally known method. Examples of the method that may be used for mixing include, but are not limited to, melt kneading using, for example, a mixing roll, a plastomill, or an extruder, and methods that involve dissolving each component in a suitable organic solvent, and evaporating the solvent. Melt kneading is preferred in terms of producing the composition at low cost.

A sheet obtained by molding the polyvinyl acetal composition of the present invention (for example, by extrusion molding, or compression molding) is particularly preferred for use in intermediate films for laminated glass.

Also preferred is a multilayer intermediate film for laminated glass that has at least one layer of the sheet of the present invention, and at least one other layer containing a thermoplastic resin. The other layer containing a thermoplastic resin may contain polyvinyl acetal or some other resin as the thermoplastic resin, or may contain a plasticizer. The plasticizer may be the same plasticizer contained in the polyvinyl acetal composition of the present invention, or some other plasticizer.

The thickness of the sheet is not particularly limited, and typically ranges from preferably 0.01 to 5 mm, more preferably 0.05 to 3 mm, further preferably 0.1 to 1.6 mm. The lower limit thickness of the multilayer intermediate film for laminated glass of the present invention is 0.1 mm, preferably 0.2 mm, more preferably 0.3 mm, further preferably 0.4 mm, particularly preferably 0.5 mm, even more preferably 0.6 mm, especially preferably 0.7 mm, optimally 0.75 mm.

The upper limit is 5 mm, preferably 4 mm, more preferably 2 mm, further preferably 1.6 mm, particularly preferably 1.2 mm, even more preferably 1.1 mm, especially preferably 1 mm, optimally 0.79 mm.

When the sheet of the present invention is used as an intermediate film for laminated glass, or a multilayer intermediate film for laminated glass, the glass laminated to the intermediate film for laminated glass, or to the multilayer intermediate film for laminated glass of the present invention is not particularly limited. Examples of the glass include inorganic glasses such as float plate glass, polished plate glass, figured glass, wire-reinforced plate glass, and heat-absorbing plate glass; and conventionally known organic glasses such as polymethylmethacrylate, and polycarbonate. These may be colorless or colored. These may be used alone or in a combination of two or more. The glass thickness is not particularly limited, and the preferred thickness is typically 100 mm or less.

When the sheet of the present invention is used as an intermediate film for laminated glass, or a multilayer intermediate film for laminated glass, the surface shape of the sheet or the surface shape of the multilayer intermediate film for laminated glass is not particularly limited. However, it is preferable that the sheet or the multilayer intermediate film for laminated glass has a concavo-convex structure because it provides desirable bubble removal during thermocompression of glass with the sheet or the multilayer intermediate film for laminated glass.

A laminated glass obtained by using the intermediate film for laminated glass, or the multilayer intermediate film for laminated glass of the present invention also constitutes the present invention. Such a laminated glass can be produced by using conventionally known methods, including, for example, methods that use a vacuum laminator, methods that use a vacuum bag, methods that use a vacuum ring, and methods that use a nip roll. It is also possible to use a method that feeds a temporarily pressed glass from these methods to an autoclave for final bonding.

Examples

The present invention is described in greater detail referring to Examples, Reference Examples and Comparative Examples. Examples 30 to 64 arte Reference Examples only, i.e. not being in accordance with the invention.

Production Example 1

4,000grams of ion-exchange water, and 400 grams of polyvinyl alcohol (viscosity average degree of polymerization = 1,700, degree of saponification = 99 mol%) were charged into a 5-liter glass container equipped with a reflux condenser, a thermometer, and anchor-shaped stirring vanes. The mixture was raised to 95°C to completely dissolve the polyvinyl alcohol. The resulting solution was allowed to cool to 10°C over a time period of about 30 min while being stirred at 120 rpm, and 226 g of butyraldehyde and 200 mL of a 20 mass% hydrochloric acid aqueous solution were added. The mixture was raised to 65°C over a time period of 60 min, maintained at 65°C for 120 min, and cooled to room temperature. After washing the resulting resin with ion-exchange water, the residual acid was neutralized by adding a sodium hydroxide aqueous solution, and the product was washed with excess ion-exchange water, and dried to obtain a polyvinyl butyral (PVB-1). Analyses of PVB-1 according to JIS K6728 revealed that the average degree of butyralization (average degree of acetalization) was 68 mol%, the average amount of residual vinyl ester group was 1 mol%, and the average amount of residual hydroxyl group was 31 mol%.

Production Example 2

A polyvinyl butyral (PVB-2) was obtained in the same manner as in Production Example 1, except that the butyraldehyde was used in an amount of 240 g. Analyses of PVB-2 according to JIS K6728 revealed that the average degree of butyralization (average degree of acetalization) was 72 mol%, the average amount of residual vinyl ester group was 1 mol%, and the average amount of residual hydroxyl group was 27 mol%.

Production Example 3

A polyvinyl butyral (PVB-3) was obtained in the same manner as in Production Example 1, except that the butyraldehyde was used in an amount of 213 g. Analyses of PVB-3 according to JIS K6728 revealed that the average degree of butyralization (average degree of acetalization) was 64 mol%, the average amount of residual vinyl ester group was 1 mol%, and the average amount of residual hydroxyl group was 35 mol%.

Production Example 4

A polyvinyl butyral (PVB-4) was obtained in the same manner as in Production Example 1, except that the butyraldehyde was used in an amount of 270 g. Analyses of PVB-4 according to JIS K6728 revealed that the average degree of butyralization (average degree of acetalization) was 78 mol%, the average amount of residual vinyl ester

group was 1 mol%, and the average amount of residual hydroxyl group was 21 mol%.

Example 1

100 parts by mass of PVB-1, 15 parts by mass of PEs-1 (a condensation polymerization polyester-based alcohol compound obtained by condensation polymerization of 3-methyl-1,5-pentanediol and adipic acid; hydroxyl number = 220 mgKOH/g, number average molecular weight based on hydroxyl number = 510), 45 parts by mass of triethylene glycol di-2-ethylhexanoate (3G8), 0.08 parts by mass of an antioxidant BHT (2,6-di-t-butyl-4-hydroxytoluene), and 0.15 parts by mass of an UV absorber 2-(3,5-di-tert-amyl-2-hydroxyphenyl)benzotriazole (trade name: Tinuvin 328; manufactured by Ciba) were stirred, and coarsely mixed in a beaker. The mixture was then melt kneaded with a laboplasto mill (150°C, 7 min) to obtain a composition-1. The composition-1 was pressed at 150°C under 50 kg/cm$^2$ for 30 min to fabricate a sheet-1 having a thickness of 0.8 mm. The sheet-1 was sandwiched between a pair of float glass plates each measuring 300 mm × 300 mm × 3 mm, and temporarily bonded with a nip roll. The laminate was then processed in an autoclave at 140°C under 1.2 MPa for 30 min to obtain a laminated glass-1.

Haze Measurement

The laminated glass-1 was cut into a 5 cm × 5 cm size, and measured for haze using a haze meter (HZ-1) available from Suga Test Instruments Co., Ltd. The haze was 0.2%.

Loss Factor Measurement

The laminated glass-1 was cut into a 2.5 cm × 30 cm size, and vibrated in a 20°C atmosphere using a vibrator (Small Vibrator 512-A, manufactured by EMIC). An FFT analyzer (Ono Sokki Co., Ltd., DS-2100) was used to detect the frequency response function, and a loss factor at 3,000Hz was calculated using servo analysis software (Ono Sokki Co., Ltd., DS-0242). Larger loss factors mean that the laminated glass has better sound insulation performance.

Low-Temperature Bleed Test

The sheet-1 was humidified to make the water content 0.5%, and stored at 5°C for 1 week. After storage, the sheet surface was gently wiped with tissue paper, and the presence or absence of the plasticizer on the tissue paper was visually inspected for evaluation. Samples were labeled "Present" when the plasticizer adhered to the tissue paper, and "Absent" when the plasticizer did not adhere to the tissue paper.

Hot Water Dipping (Sheet)

The sheet-1 was cut into a 5 cm × 5 cm size (about 2 g weight), and dried in a desiccator to make the water content less than 0.1% (here, the mass of the sheet-1 is a "mass before testing"). The sheet-1 was then dipped in 500 mL of 92.5 ± 2.5°C hot water for 2 h (maintained at 92.5 ± 2.5°C), and dried in a desiccator to obtain a tested sheet-1 (here, the mass of the sheet-1 is a "mass after testing") . The weight loss rate before and after the testing was then calculated as follows.

Weight loss rate before and after testing = ((mass before testing - mass after testing)/mass before testing)

The tested sheet-1 was subjected to the same low-temperature bleed test performed above to determine the presence or absence of plasticizer bleeding.

Hot Water Dipping (Laminated Glass)

The laminated glass-1 was cut into a 10 cm × 10 cm size, and dipped in 50 mL of 92.5 ± 2.5°C hot water for 2 h (maintained at 92.5 ± 2.5°C) . After being processed, the laminated glass was visually inspected for occurrence of bubbles in the glass.

Compatibility between Compound (I) and Diester Compound (II)

X parts by mass of compound (I), and Y parts by mass of diester compound (II) were put in a flask to make the total amount 50 g, and the mixture was stirred at 80°C or at 20°C for 30 min using a rotor and a magnetic stirrer. The resulting liquid immediately after the stirring was visually inspected to determine whether the liquid turned into a homogenous transparent liquid. Samples that were homogenous transparent solutions were labeled "Homogenous", and samples that were not homogenous transparent solutions were labeled "Non-Homogenous".

Examples 2 to 29, and Comparative Examples 1 to 6

The polyester-based alcohol compounds (PEs-1 to 7) shown in Table 1 were tested in the same manner as in Example 1, except that these were used in the compositions shown in Table 2 or 3. The results are presented in Table 2 or 3.

Examples 30 to 46, and Comparative Examples 7 to 10

Tests were performed in the same manner as in Example 1, except that the plasticizer compounds having a bisphenol ether skeleton (BP-1 to 7) shown in Table 4 were used as compound (I) in the compositions shown in Table 4. The results are presented in Table 5.

(Examples 47 to 64, and Comparative Examples 11 to 16)

Tests were performed in the same manner as in Example 1, except that the unsaturated carboxylic acid ester compounds (CEs-1 to 6) shown in Table 6 were used as compound (I) in the compositions shown in Table 7 or 8. The results are presented in Table 7 or 8.

[Table 1]

| | Chemical structure | Hydroxyl number (mgKOH/g) | Number average molecular weight based on hydroxyl number |
|---|---|---|---|
| PEs-1 | Condensation polymerization polyester-based alcohol compound obtained by condensation polymerization of 3-methyl-1,5-pentanediol and adipic acid | 220 | 510 |
| PEs-2 | Condensation polymerization polyester-based alcohol compound obtained by condensation polymerization of 3-methyl-1,5-pentanediol and adipic acid | 150 | 750 |
| PEs-3 | Condensation polymerization polyester-based alcohol compound obtained by condensation polymerization of 3-methyl-1,5-pentanediol and sebacic acid | 200 | 560 |
| PEs-4 | Condensation polymerization polyester-based alcohol compound obtained by condensation polymerization of 1,8-nonanediol and adipic acid | 120 | 930 |
| PEs-5 | Condensation polymerization polyester-based alcohol compound obtained by condensation polymerization of 3-methyl-1,5-pentanediol and adipic acid | 80 | 1400 |
| PEs-6 | Hydroxycarboxylic acid ester-based alcohol compound after addition polymerization of ethylene glycol with ε-caprolactone | 210 | 530 |
| PEs-7 | Condensation polymerization polyester-based alcohol compound obtained by reaction of 3-methyl-1,5-pentanediol and diethyl carbonate | 180 | 620 |

[Table 2]

| | PVB (100 parts by mass) | Polyester-based alcohol compound | | Diester compound | | X + Y (parts by mass) | Haze (%) | Loss factor | Low-temperature bleed | Dipping in hot water (sheet) | | Dipping in hot water (laminated glass) | Compatibility between polyester-based alcohol compound and diester compound | |
|---|---|---|---|---|---|---|---|---|---|---|---|---|---|---|
| | | Type | X (parts by mass) | Type | Y (parts by mass) | | | | | Weight loss (mass%) | Low-temperature bleed | Bubbling | 80°C | 20°C |
| Ex. 1 | PVB-1 | PEs-1 | 15 | 3G8 | 45 | 60 | 0.2 | 0.28 | Absent | 0.4 | Absent | Absent | Compatible | Compatible |
| Ex. 2 | PVB-1 | PEs-1 | 20 | 3G8 | 35 | 55 | 0.2 | 0.26 | Absent | 0.5 | Absent | Absent | Compatible | Compatible |
| Ex. 3 | PVB-1 | PEs-1 | 15 | 3G8 | 30 | 45 | 0.2 | 0.14 | Absent | 0.4 | Absent | Absent | Compatible | Compatible |
| Ex. 4 | PVB-1 | PEs-1 | 35 | 3G8 | 20 | 55 | 0.2 | 0.25 | Absent | 1.2 | Absent | Several at end portions | Homogenous | Homogenous |
| Ex. 5 | PVB-1 | PEs-1 | 20 | 3G8 | 50 | 70 | 0.3 | 0.27 | Absent | 0.5 | Absent | Absent | Homogenous | Homogenous |
| Ex. 6 | PVB-1 | PEs-1 | 15 | DHA | 45 | 60 | 0.4 | 0.28 | Absent | 0.4 | Absent | Absent | Homogenous | Homogenous |
| Ex. 7 | PVB-1 | PEs-1 | 20 | DHA | 35 | 55 | 0.3 | 0.27 | Absent | 0.4 | Absent | Absent | Homogenous | Homogenous |
| Ex. 8 | PVB-2 | PEs-1 | 20 | 3G8 | 35 | 55 | 0.2 | 0.27 | Absent | 0.5 | Absent | Absent | Homogenous | Homogenous |
| Ex. 9 | PVB-2 | PEs-1 | 35 | 3G8 | 20 | 55 | 0.2 | 0.26 | Absent | 1.1 | Absent | Several at end portions | Homogenous | Homogenous |
| Ex. 10 | PVB-1 | PEs-2 | 15 | 3G8 | 45 | 60 | 0.3 | 0.26 | Absent | 0.3 | Absent | Absent | Homogenous | Homogenous |
| Ex. 11 | PVB-1 | PEs-2 | 20 | 3G8 | 35 | 55 | 0.2 | 0.25 | Absent | 0.3 | Absent | Absent | Homogenous | Homogenous |
| Ex. 12 | PVB-1 | PEs-2 | 15 | 3G8 | 30 | 45 | 0.2 | 0.13 | Absent | 0.3 | Absent | Absent | Homogenous | Homogenous |
| Ex. 13 | PVB-1 | PEs-3 | 15 | 3G8 | 45 | 60 | 0.3 | 0.26 | Absent | 0.3 | Absent | Absent | Homogenous | Homogenous |
| Ex. 14 | PVB-1 | PEs-4 | 15 | 3G8 | 45 | 60 | 0.4 | 0.24 | Absent | 0.3 | Absent | Absent | Homogenous | Homogenous |
| Ex. 15 | PVB-1 | PEs-5 | 15 | 3G8 | 45 | 60 | 0.4 | 0.21 | Absent | 0.2 | Absent | Absent | Homogenous | Homogenous |
| Ex. 16 | PVB-1 | PEs-6 | 15 | 3G8 | 45 | 60 | 0.3 | 0.27 | Absent | 0.3 | Absent | Absent | Homogenous | Homogenous |
| Ex. 17 | PVB-1 | PEs-6 | 20 | 3G8 | 35 | 55 | 0.2 | 0.26 | Absent | 0.3 | Absent | Absent | Homogenous | Homogenous |
| Ex. 18 | PVB-1 | PEs-6 | 15 | 3G8 | 30 | 45 | 0.2 | 0.13 | Absent | 0.2 | Absent | Absent | Homogenous | Homogenous |
| Ex. 19 | PVB-1 | PEs-6 | 35 | 3G8 | 20 | 55 | 0.2 | 0.23 | Absent | 0.4 | Absent | Absent | Homogenous | Homogenous |
| Ex. 20 | PVB-1 | PEs-6 | 20 | 3G8 | 50 | 70 | 0.3 | 0.25 | Absent | 0.3 | Absent | Absent | Homogenous | Homogenous |

3G8: Triethylene glycol di-2-ethylhexanoate, DHA: Dihexyl adipate

[Table 3]

| | PVB (100 parts by mass) | Polyester-based alcohol compound | | Diester compound | | X + Y (parts by mass) | Haze (%) | Loss factor | Low-temperature bleed | Dipping in hot water (sheet) | | Dipping in hot water (laminated glass) | Compatibility between polyester-based alcohol compound and diester compound | |
|---|---|---|---|---|---|---|---|---|---|---|---|---|---|---|
| | | Type | X (parts by mass) | Type | Y (parts by mass) | | | | | Weightloss (mass%) | Low-temperature bleed | Bubbling | 80°C | 20°C |
| Ex. 21 | PVB-1 | PEs-6 | 20 | DHA | 35 | 55 | 0.2 | 0.26 | Absent | 0.3 | Absent | Absent | Homogenous | Homogenous |
| Ex. 22 | PVB-1 | PEs-6 | 15 | DHA | 45 | 60 | 0.2 | 0.26 | Absent | 0.2 | Absent | Absent | Homogenous | Homogenous |
| Ex. 23 | PVB-1 | PEs-7 | 15 | 3G8 | 45 | 60 | 0.4 | 0.27 | Absent | 0.3 | Absent | Absent | Homogenous | Homogenous |
| Ex. 24 | PVB-1 | PEs-7 | 20 | 3G8 | 35 | 55 | 0.2 | 0.25 | Absent | 0.3 | Absent | Absent | Homogenous | Homogenous |
| Ex. 25 | PVB-1 | PEs-7 | 15 | 3G8 | 30 | 45 | 0.2 | 0.14 | Absent | 0.3 | Absent | Absent | Homogenous | Homogenous |
| Ex. 26 | PVB-1 | PEs-7 | 35 | 3G8 | 20 | 55 | 0.2 | 0.23 | Absent | 0.3 | Absent | Absent | Homogenous | Homogenous |
| Ex. 27 | PVB-1 | PEs-7 | 20 | 3G8 | 50 | 70 | 0.4 | 0.24 | Absent | 0.3 | Absent | Absent | Homogenous | Homogenous |
| Ex. 28 | PVB-1 | PEs-7 | 20 | DHA | 35 | 55 | 0.2 | 0.25 | Absent | 0.3 | Absent | Absent | Homogenous | Homogenous |
| Ex. 29 | PVB-1 | PEs-7 | 15 | DHA | 45 | 60 | 0.3 | 0.26 | Absent | 0.2 | Absent | Absent | Homogenous | Homogenous |
| Com. Ex. 1 | PVB-1 | PEs-1 | 15 | 3G8 | 15 | 30 | 0.2 | 0.03 | Absent | 0.4 | Absent | Absent | Homogenous | Homogenous |
| Com. Ex. 2 | PVB-1 | PEs-1 | 0 | 3G8 | 55 | 55 | 0.4 | 0.28 | Present | 0.5 | Absent | Absent | - | - |
| Com. Ex. 3 | PVB-1 | PEs-1 | 55 | 3G8 | 0 | 55 | 0.3 | 0.26 | Absent | 2.3 | Absent | Many at end portions | - | - |
| Com. Ex. 4 | PVB-1 | PEs-1 | 55 | 3G8 | 30 | 85 | 1.2 | 0.26 | Absent | 2.5 | Slightly present | Many at end portions | Homogenous | Homogenous |
| Com. Ex. 5 | PVB-1 | PEG-1 *1 | 15 *3 | 3G8 | 45 | 60 *4 | Plasticizer bled at room temperature (not evaluated) | | | | | | Non-homogenous* 5 | Non-homogenous * 5 |

(continued)

| | PVB (100 parts by mass) | Polyester-based alcohol compound | | Diester compound | | X + Y (parts by mass) | Haze (%) | Loss factor | Low-temperature bleed | Dipping in hot water (sheet) | | Dipping in hot water (laminated glass) | Compatibility between polyester-based alcohol compound and diester compound | |
|---|---|---|---|---|---|---|---|---|---|---|---|---|---|---|
| | | Type | X (parts by mass) | Type | Y (parts by mass) | | | | | Weight loss (mass%) | Low-temperature bleed | Bubbling | 80°C | 20°C |
| Com. Ex. 6 | PVB-1 | PPG-1 *2 | 15 *3 | 3G8 | 45 | 60 *4 | 0.2 | 0.27 | Absent | 3.2 | Present | Many at end portions | Homogenous* 6 | Homogenous* 6 |

3G8: Triethylene glycol di-2-ethylhexanoate, DHA: Dihexyl adipate
*1: Polyethylene glycol; hydroxyl number 280 mgKOH/g; number average molecular weight based on hydroxyl number 400
*2: Polypropylene glycol; hydroxyl number 280 mgKOH/g; number average molecular weight based on hydroxyl number 400
*3: Amount of PEG-1 or PPG-1 with respect to 100 parts by mass of PVB
*4: Total amount of PEG-1 or PPG-1 and diester compound
*5: Evaluation as a mixture of 45 parts by mass of 3G8 and 15 parts by mass of PEG-1
*6: Evaluation as a mixture of 45 parts by mass of 3G8 and 15 parts by mass of PPG-1

[Table 4]

| | Compound | Chemical structure shown in formula 3 | | | | | | | | | Hydroxyl number (mgKOH/g) |
|---|---|---|---|---|---|---|---|---|---|---|---|
| | | $R^6$ | $R^7$ | $R^8$ | $R^9$ | $R^{10}$ | $R^{11}$ | $R^{12}$ | $R^{13}$ | Average of k + 1 | |
| BP-1 | Bisphenol ether compound | $-CH_2-CH(-CH_3)-$ | $-CH_2-CH(-CH_3)-$ | H | H | Methyl group | Methyl group | Absent | Absent | 7.2 | 287 |
| BP-2 | Bisphenol ether compound | $-CH_2-CH(-CH_3)-$ | $-CH_2-CH(-CH_3)-$ | H | H | Methyl group | Methyl group | Absent | Absent | 12.0 | 325 |
| BP-3 | Bisphenol ether compound | $-CH_2-CH(-CH_3)-$ | $-CH_2-CH(-CH_3)-$ | H | H | Methyl group | Methyl group | Absent | Absent | 3.3 | 240 |
| BP-4 | Bisphenol ether compound | $-CH_2-CH(-CH_3)-$ | $-CH_2-CH(-CH_3)-$ | Acetyl group | Acetyl group | Methyl group | Methyl group | Absent | Absent | 7.2 | <5 |
| BP-5 | Bisphenol ether compound | $-CH_2-CH_2-$ | $-CH_2-CH_2-$ | H | H | Methyl group | Methyl group | Absent | Absent | 5.5 | 345 |
| BP-6 | Bisphenol ether compound | $-CH_2-CH_2-$ | $-CH_2-CH_2-$ | H | H | Methyl group | Methyl group | Absent | Absent | 8.3 | 319 |
| BP-7 | Bisphenol A diacetate | - | - | - | - | - | - | - | - | - | <5 |

[Table 5]

| | PVB (100 parts by mass) | Plasticizer compound having bisphenol skeleton | | Diester compound | | X + Y (parts by mass) | Haze (%) | Loss factor | Low-temperature bleed | Dipping in hot water (sheet) | | Dipping in hot water (laminated glass) | Compatibility between plasticizer compound having bisphenol skeleton and diester compound | |
|---|---|---|---|---|---|---|---|---|---|---|---|---|---|---|
| | | Type | X (parts by mass) | Type | Y (parts by mass) | | | | | Weight loss (mass%) | Low-temperature bleed | Bubbling | 80°C | 20°C |
| Ex. 30 | PVB-1 | BP-1 | 20 | 3G8 | 45 | 65 | 0.2 | 0.3 | Absent | 0.4 | Absent | Absent | Homogenous | Homogenous |
| Ex. 31 | PVB-1 | BP-1 | 25 | 3G8 | 40 | 65 | 0.2 | 0.28 | Absent | 0.5 | Absent | Absent | Homogenous | Homogenous |
| Ex. 32 | PVB-1 | BP-1 | 20 | 3G8 | 25 | 45 | 0.2 | 0.15 | Absent | 0.3 | Absent | Absent | Homogenous | Homogenous |
| Ex. 33 | PVB-1 | BP-1 | 35 | 3G8 | 30 | 65 | 0.2 | 0.28 | Absent | 0. 8 | Absent | Absent | Homogenous | Homogenous |
| Ex. 34 | PVB-1 | BP-1 | 60 | 3G8 | 25 | 85 | 0.3 | 0.29 | Absent | 1.2 | Absent | Several at end portions | Homogenous | Homogenous |
| Ex. 35 | PVB-1 | BP-1 | 20 | DHA | 45 | 65 | 0.4 | 0.3 | Absent | 0.6 | Absent | Absent | Homogenous | Homogenous |
| Ex. 36 | PVB-1 | BP-1 | 25 | DHA | 40 | 65 | 0.3 | 0.28 | Absent | 0.6 | Absent | Absent | Homogenous | Homogenous |
| Ex. 37 | PVB-2 | BP-1 | 20 | 3G8 | 45 | 65 | 0.2 | 0.28 | Absent | 0.5 | Absent | Absent | Homogenous | Homogenous |
| Ex. 38 | PVB-2 | BP-1 | 35 | 3G8 | 30 | 65 | 0.2 | 0.27 | Absent | 0. 7 | Absent | Absent | Homogenous | Homogenous |
| Ex. 39 | PVB-1 | BP-2 | 20 | 3G8 | 45 | 65 | 0.3 | 0.25 | Absent | 0.3 | Absent | Absent | Homogenous | Homogenous |
| Ex. 40 | PVB-1 | BP-2 | 25 | 3G8 | 40 | 65 | 0.2 | 0.25 | Absent | 0.3 | Absent | Absent | Homogenous | Homogenous |
| Ex. 41 | PVB-1 | BP-2 | 20 | 3G8 | 25 | 45 | 0.2 | 0.13 | Absent | 0.2 | Absent | Absent | Homogenous | Homogenous |
| Ex. 42 | PVB-1 | BP-3 | 20 | 3G8 | 45 | 65 | 0.3 | 0.35 | Absent | 0.3 | Absent | Absent | Homogenous | Homogenous |
| Ex. 43 | PVB-1 | BP-4 | 20 | 3G8 | 45 | 65 | 0.4 | 0.26 | Absent | 0.1 | Absent | Absent | Homogenous | Homogenous |
| Ex. 44 | PVB-1 | BP-5 | 20 | 3G8 | 45 | 65 | 0.4 | 0.23 | Absent | 0.6 | Absent | Absent | Homogenous | Homogenous |
| Ex. 45 | PVB-1 | BP-6 | 20 | 3G8 | 45 | 65 | 0.3 | 0.29 | Absent | 0. 7 | Absent | Absent | Homogenous | Homogenous |
| Ex. 46 | PVB-1 | BP-7 | 20 | 3G8 | 45 | 65 | 0.4 | 0.35 | Absent | 0.1 | Absent | Absent | Homogenous | Homogenous |
| Com. Ex. 7 | PVB-1 | BP-1 | 15 | 3G8 | 20 | 35 | 0.2 | 0.04 | Absent | 0.4 | Absent | Absent | Homogenous | Homogenous |
| Com. Ex. 8 | PVB-1 | BP-1 | 0 | 3G8 | 55 | 55 | 0.4 | 0.28 | Present | 0.5 | Absent | Absent | - | - |

(continued)

| | PVB (100 parts by mass) | Plasticizer compound having bisphenol skeleton | | Diester compound | | X + Y (parts by mass) | Haze (%) | Loss factor | Low-temperature bleed | Dipping in hot water (sheet) | | Dipping in hot water (laminated glass) | Compatibility between plasticizer compound having bisphenol skeleton and diester compound | |
|---|---|---|---|---|---|---|---|---|---|---|---|---|---|---|
| | | Type | X (parts by mass) | Type | Y (parts by mass) | | | | | Weight loss (mass%) | Low-temperature bleed | Bubbling | 80°C | 20°C |
| Com. Ex. 9 | PVB-1 | BP-1 | 55 | 3G8 | 0 | 55 | 0.3 | 0.17 | Absent | 2.3 | Absent | Many at end portions | - | - |
| Com. Ex. 10 | PVB-1 | BP-1 | 100 | 3G8 | 25 | 125 | 1.2 | 0.28 | Absent | 2.5 | Slightly present | Many at end portions | Homogenous | Homogenous |
| 3G8: Triethylene glycol di-2-ethylhexanoate, DHA: Dihexyl adipate | | | | | | | | | | | | | | |

[Table 6]

| | Chemical structure | Hydroxyl number (mgKOH/g) | Number average molecular weight based on hydroxyl number |
|---|---|---|---|
| CEs-1 | Ethylene glycol monoricinoleate | 327 | 342 |
| CEs-2 | Propylene glycol monoricinoleate | 315 | 356 |
| CEs-3 | Castor oil | 160 | 910 |
| CEs-4 | Methyl ricinoleate | 179 | 312 |
| CEs-5 | Butyl ricinoleate | 158 | 354 |
| CEs-6 | Butyl oleate | <1 | 338 *1 |
| *1: Molecular weight | | | |

[Table 7]

| | PVB (100 parts by mass) | Unsaturated carboxylic acid ester compound | | Diester compound | | X + Y (parts by mass) | Haze (%) | Loss factor | Low-temperature bleed | Dipping in hot water (sheet) | | Dipping in hot water (laminated glass) | Compatibility between unsaturated carboxylic acid ester compound and diester compound | |
|---|---|---|---|---|---|---|---|---|---|---|---|---|---|---|
| | | Type | X (parts by mass) | Type | Y (parts by mass) | | | | | Weight loss (mass%) | Low-temperature bleed | Bubbling | 80°C | 20°C |
| Ex. 47 | PVB-1 | CEs-1 | 15 | 3G8 | 40 | 55 | 0.2 | 0.28 | Absent | 0.4 | Absent | Absent | Homogenous | Homogenous |
| Ex. 48 | PVB-1 | CEs-1 | 20 | 3G8 | 30 | 50 | 0.2 | 0.27 | Absent | 0.5 | Absent | Absent | Homogenous | Homogenous |
| Ex. 49 | PVB-1 | CEs-1 | 15 | 3G8 | 30 | 45 | 0.2 | 0.25 | Absent | 0.4 | Absent | Absent | Homogenous | Homogenous |
| Ex. 50 | PVB-1 | CEs-1 | 35 | 3G8 | 15 | 50 | 0.2 | 0.15 | Absent | 0.7 | Absent | Absent | Homogenous | Homogenous |
| Ex. 51 | PVB-1 | CEs-1 | 20 | 3G8 | 45 | 65 | 0.2 | 0.27 | Absent | 0.5 | Absent | Absent | Homogenous | Homogenous |
| Ex. 52 | PVB-1 | CEs-1 | 15 | DHA | 40 | 55 | 0.4 | 0.28 | Absent | 0.3 | Absent | Absent | Homogenous | Homogenous |
| Ex. 53 | PVB-1 | CEs-1 | 20 | DHA | 30 | 50 | 0.2 | 0.27 | Absent | 0.4 | Absent | Absent | Homogenous | Homogenous |
| Ex. 54 | PVB-2 | CEs-1 | 20 | 3G8 | 30 | 50 | 0.2 | 0.29 | Absent | 0.5 | Absent | Absent | Homogenous | Homogenous |
| Ex. 55 | PVB-2 | CEs-1 | 35 | 3G8 | 15 | 50 | 0.2 | 0.27 | Absent | 0.7 | Absent | Absent | Homogenous | Homogenous |
| Ex. 56 | PVB-1 | CEs-2 | 15 | 3G8 | 40 | 55 | 0.2 | 0.28 | Absent | 0.7 | Absent | Absent | Homogenous | Homogenous |
| Ex. 57 | PVB-1 | CEs-2 | 20 | 3G8 | 30 | 50 | 0.2 | 0.27 | Absent | 0.6 | Absent | Absent | Homogenous | Homogenous |
| Ex. 58 | PVB-1 | CEs-2 | 15 | 3G8 | 30 | 45 | 0.3 | 0.15 | Absent | 0.6 | Absent | Absent | Homogenous | Homogenous |
| Ex. 59 | PVB-1 | CEs-3 | 15 | 3G8 | 40 | 55 | 0.4 | 0.26 | Absent | 0.3 | Absent | Absent | Homogenous | Homogenous |
| Ex. 60 | PVB-1 | CEs-4 | 15 | 3G8 | 40 | 55 | 0.4 | 0.28 | Absent | 0.3 | Absent | Absent | Homogenous | Homogenous |
| 3G8: Triethylene glycol di-2-ethylhexanoate, DHA: Dihexyl adipate | | | | | | | | | | | | | | |

[Table 8]

| | PVB (100 parts by mass) | Unsaturated carboxylic acid ester compound | | Diester compound | | X + Y (parts by mass) | Haze (%) | Loss factor | Low-temperature bleed | Dipping in hot water (sheet) | | Dipping in hot water (laminated glass) | Compatibility between unsaturated carboxylic acid ester compound and diester compound | |
|---|---|---|---|---|---|---|---|---|---|---|---|---|---|---|
| | | Type | X (parts by mass) | Type | Y (parts by mass) | | | | | Weight loss (mass%) | Low-temperature bleed | Bubbling | 80°C | 20°C |
| Ex. 61 | PVB-1 | CEs-5 | 15 | 3G8 | 40 | 55 | 0.4 | 0.28 | Absent | 0.2 | Absent | Absent | Homogenous | Homogenous |
| Ex. 62 | PVB-1 | CEs-6 | 15 | 3G8 | 40 | 55 | 0.3 | 0.27 | Absent | 0.3 | Absent | Absent | Homogenous | Homogenous |
| Ex. 63 | PVB-3 | CEs-1 | 15 | 3G8 | 40 | 55 | 0.2 | 0.13 | Present | 0.4 | Absent | Absent | Homogenous | Homogenous |
| Ex. 64 | PVB-4 | CEs-1 | 15 | 3G8 | 40 | 55 | 0.2 | 0.23 | Absent | 2.1 | Present | Many at end portions | Homogenous | Homogenous |
| Com. Ex. 11 | PVB-1 | CEs-1 | 15 | 3G8 | 15 | 30 | 0.2 | 0.04 | Absent | 0.4 | Absent | Absent | Homogenous | Homogenous |
| Com. Ex. 12 | PVB-1 | CEs-1 | 0 | 3G8 | 55 | 55 | 0.4 | 0.28 | Present | 0.5 | Absent | Absent | - | - |
| Com. Ex. 13 | PVB-1 | CEs-1 | 55 | 3G8 | 0 | 55 | 0.3 | 0.28 | Absent | 2.3 | Absent | Many at end portions | - | - |
| Com. Ex. 14 | PVB-1 | CEs-1 | 55 | 3G8 | 30 | 85 | 1.4 | 0.22 | Absent | 2.4 | Slightly present | Many at end portions | Homogenous | Homogenous |
| Com. Ex. 15 | PVB-1 | PEG-1 *1 | 15 *3 | 3G8 | 40 | 55 *4 | Plasticizer bled at room temperature (not evaluated) | | | | | | Non-homogenous *5 | Non-homogenous *5 |
| Com. Ex. 16 | PVB-1 | PPG-1 *2 | 15 *3 | 3G8 | 40 | 55 *4 | 0.2 | 0.27 | Absent | 3.2 | Present | Many at end portions | Homogenous *6 | Homogenous *6 |

3G8: Triethylene glycol di-2-ethylhexanoate, DHA: Dihexyl adipate
*1: Polyethylene glycol; hydroxyl number 280 mgKOH/g; number average molecular weight based on hydroxyl number 400
*2: Polypropylene glycol; hydroxyl number 280 mgKOH/g; number average molecular weight based on hydroxyl number 400
*3: Amount of PEG-1 or PPG-2 with respect to 100 parts by mass of PVB
*4: Total amount of PEG-1 or PPG-1 and diester compound
*5: Evaluation as a mixture of 45 parts by mass of 3G8 and 15 parts by mass of PEG-1
*6: Evaluation as a mixture of 45 parts by mass of 3G8 and 15 parts by mass of PPG-1

It can be seen from the results shown in Tables 2, 3, 5, and 7 to 8 that the compositions satisfying the conditions specified by the present invention do not cause a bleed in the plasticizer even when stored at low temperature, and that problems due to extraction of a component do not occur even when the compositions contact water. It can also been seen that a laminated glass having desirable sound insulation can be obtained when the sheet made from the compositions satisfying the conditions specified by the present invention is used as an intermediate film for laminated glass.

Industrial Applicability

The composition of the present invention does not involve bleeding of a plasticizer even when stored at low temperature, or cause problems due to extraction of a component even when brought into contact with water. The composition of the present invention can thus develop desirable sound insulation performance when used as an intermediate film for laminated glass, and is suited as a material of an intermediate film for laminated glass.

## Claims

1. A composition comprising a compound (I), and one or more diester compounds (II) selected from compounds represented by formula 1,

   the compound (I) and the one or more diester compounds (II) being contained in X parts by mass and Y parts by mass, respectively, with respect to 100 parts by mass of a polyvinyl acetal having an average amount of residual hydroxyl group of 15 to 50 mol%, said average amount of residual hydroxyl group of the polyvinyl acetal being determined according to JIS K6728,
   wherein the compound (I) is a polyester-based alcohol compound having a polyester structure and at least one hydroxyl group per molecule, and
   wherein X = 3 to 100, Y = 5 to 60, and X + Y = 42 to 120,

   [Chem. 1]

   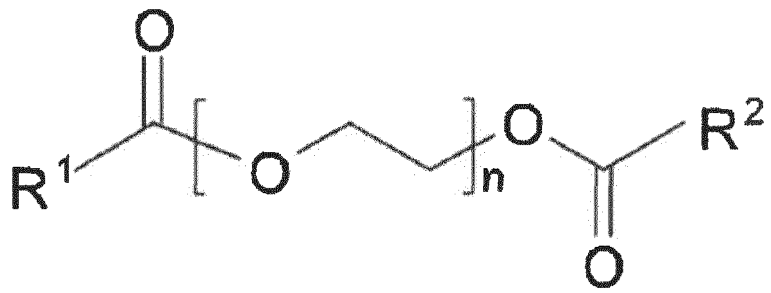

   (Formula 1)

   wherein $R^1$ and $R^2$ each independently represent a C5 to C16 organic group that may have an ether bond, and n is 1 to 10.

2. The composition according to claim 1, wherein X < Y.

3. The composition according to claim 1 or 2, wherein the compound (I) has a hydroxyl number of 15 to 450 mgKOH/g as determined according to JIS K1557-1.

4. The composition according to any one of claims 1 to 3, wherein the polyester-based alcohol compound contains a condensation polymer of a polyvalent carboxylic acid and a polyhydric alcohol,
   wherein the number of carbon atoms per molecule of the polyvalent carboxylic acid, and the number of carbon atoms per molecule of the polyhydric alcohol are total 10 to 20.

5. The composition according to claim 4, wherein the polyvalent carboxylic acid is an aliphatic dicarboxylic acid of 4

to 12 carbon atoms.

6. The composition according to claim 4, wherein the polyhydric alcohol is an aliphatic diol of 2 to 12 carbon atoms.

7. The composition according to any one of claims 1 to 3, wherein the polyester-based alcohol compound contains a polymer of a hydroxycarboxylic acid or a lactone compound,
wherein the hydroxycarboxylic acid or the lactone compound has 2 to 10 carbon atoms.

8. The composition according to any one of claims 1 to 3, wherein the polyester-based alcohol compound contains a condensation polymer of a carbonate compound and a polyhydric alcohol,
wherein the polyhydric alcohol is an aliphatic diol of 2 to 12 carbon atoms.

9. The composition according to any one of claims 1 to 8, wherein the compound (I) has a number average molecular weight based on hydroxyl number of 200 to 2,500, the number average molecular weight based on hydroxyl number being a value obtained as 1,000 × (the number of hydroxyl groups per molecule of compound(I)) / ((the hydroxyl number of compound(I))/56.

10. The composition according to any one of claims 1 to 9, wherein a mixture of X parts by mass of the compound (I) and Y parts by mass of the diester compound (II) is a homogenous liquid at 80°C.

11. A sheet comprising the composition of any one of claims 1 to 10.

12. An intermediate film for laminated glass, comprising the sheet of claim 11.

13. A multilayer intermediate film for laminated glass, comprising at least one layer of the sheet of claim 11.

14. A laminated glass comprising the intermediate film for laminated glass of claim 12, or the multilayer intermediate film for laminated glass of claim 13 between a pair of glass plates.

**Patentansprüche**

1. Zusammensetzung, umfassend eine Verbindung (I) und ein oder mehrere Diesterverbindungen (II), ausgewählt aus Verbindungen, dargestellt durch Formel 1,

wobei die Verbindung (I) und die eine oder mehreren Diesterverbindungen (II) in X-Massenteile bzw. Y-Massenteile bezüglich 100 Massenteilen eines Polyvinylacetals mit einer durchschnittlichen Menge an restlichen Hydroxylgruppen von 15 bis 50 Mol-% enthalten sind, wobei die mittlere Menge der restlichen Hydroxylgruppe des Polyvinylacetats gemäß JIS K6728 bestimmt wird,
wobei die Verbindung (I) eine Alkoholverbindung auf Polyester-Basis mit einer Polyesterstruktur von mindestens einer Hydroxylgruppe pro Molekül ist, und
worin X = 3 bis 100, Y = 5 bis 60, und X + Y = 42 bis 120,

[Chem. 1]

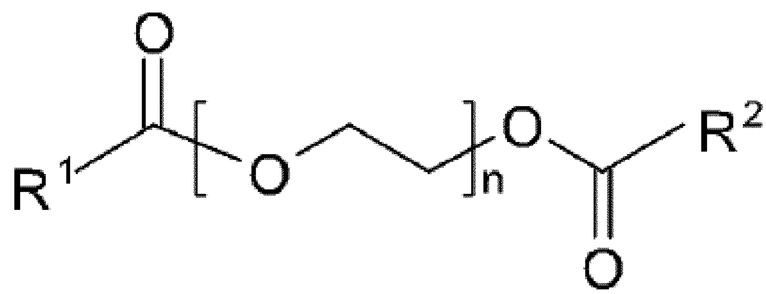

(Formel 1)

wobei $R^1$ und $R^2$ jeweils unabhängig voneinander eine C5 bis C16 organische Gruppe darstellen, die eine Etherbindung aufweisen kann, und n 1 bis 10 ist.

**2.** Zusammensetzung gemäß Anspruch 1, wobei X < Y ist.

**3.** Zusammensetzung gemäß Anspruch 1 oder 2, wobei die Verbindung (I) eine Hydroxylzahl von 15 bis 450 mgKOH/g, bestimmt gemäß JIS K 1557-1, aufweist.

**4.** Zusammensetzung gemäß einem der Ansprüche 1 bis 3, wobei die Alkoholverbindung auf Polyester-Basis ein Kondensationspolymer einer mehrwertigen Carbonsäure und eines mehrwertigen Alkohols enthält,
wobei die Anzahl an Kohlenstoffatomen pro Molekül der mehrwertigen Carbonsäure und die Anzahl an Kohlenstoffatomen pro Molekül des mehrwertigen Alkohols im Gesamten 10 bis 20 sind.

**5.** Zusammensetzung gemäß Anspruch 4, wobei die mehrwertige Carbonsäure eine aliphatische Dicarbonsäure mit 4 bis 12 Kohlenstoffatomen ist.

**6.** Zusammensetzung gemäß Anspruch 4, wobei der mehrwertige Alkohol ein aliphatisches Diol mit 2 bis 12 Kohlenstoffatomen ist.

**7.** Zusammensetzung gemäß einem der Ansprüche 1 bis 3, wobei die Alkoholverbindung auf Polyester-Basis ein Polymer einer Hydroxycarbonsäure oder einer Lactonverbindung enthält,
wobei die Hydroxycarbonsäure oder die Lactonverbindung 2 bis 10 Kohlenstoffatome aufweist.

**8.** Zusammensetzung gemäß einem der Ansprüche 1 bis 3, wobei die Alkoholverbindung auf Polyester-Basis ein Kondensationspolymer einer Carbonatverbindung und eines mehrwertigen Alkohols enthält,
wobei der mehrwertige Alkohol ein aliphatisches Diol mit 2 bis 12 Kohlenstoffatomen ist.

**9.** Zusammensetzung gemäß einem der Ansprüche 1 bis 8, wobei die Verbindung (I) ein zahlenmittleres Molekulargewicht basierend auf der Hydroxylzahl von 200 bis 2.500 aufweist, wobei das zahlenmittlere Molekulargewicht basierend auf der Hydroxylzahl ein Wert ist, erhalten als 1.000 × (die Anzahl an Hydroxylgruppen pro Molekül der Verbindung (I)) / (die Hydroxylzahl der Verbindung (I)) / 56.

**10.** Zusammensetzung gemäß einem der Ansprüche 1 bis 9, wobei ein Gemisch von X Massenteilen der Verbindung (I) und Y Massenteilen der Diesterverbindung (II) eine homogene Flüssigkeit bei 80°C ist.

**11.** Blatt, umfassend die Zusammensetzung gemäß einem der Ansprüche 1 bis 10.

**12.** Intermediärer Film für laminiertes Glas, umfassend das Blatt gemäß Anspruch 11.

**13.** Mehrschichtiger intermediärer Film für laminiertes Glas, umfassend mindestens eine Schicht des Blatts gemäß Anspruch 11.

**14.** Laminiertes Glas, umfassend den intermediären Film für laminiertes Glas gemäß Anspruch 12 oder den mehrschichtigen intermediären Film für laminiertes Glas gemäß Anspruch 13 zwischen einem Paar von Glasplatten.

## Revendications

**1.** Composition comprenant un composé (I) et un ou plusieurs composés de diester (II) sélectionnés parmi des composés représentés par la formule 1,

le composé (I) et le ou les composés de diester (II) étant contenus dans X parties en masse et Y parties en masse, respectivement, par rapport à 100 parties en masse d'un acétal de polyvinyle ayant une quantité moyenne de groupe hydroxyle résiduel de 15 à 50% en mole, ladite quantité moyenne de groupe hydroxyle résiduel de l'acétal de polyvinyle étant déterminée conformément à JIS K6728,
dans laquelle le composé (I) est un composé d'alcool à base de polyester ayant une structure de polyester et au moins un groupe hydroxyle par molécule, et dans laquelle X = 3 à 100, Y = 5 à 60, et X + Y = 42 à 120,

[Chim. 1]

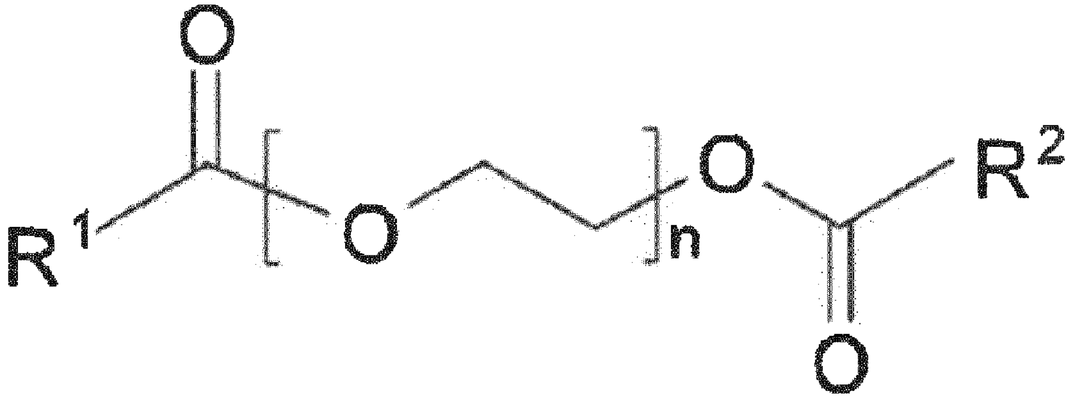

(Formule 1)

dans laquelle $R^1$ et $R^2$ représentent chacun indépendamment un groupe organique en C5 à C16 qui peut avoir une liaison éther, et n est 1 à 10.

2. Composition selon la revendication 1, dans laquelle X < Y.

3. Composition selon la revendication 1 ou 2, dans laquelle le composé (I) a un indice d'hydroxyle de 15 à 450 mgKOH/g tel que déterminé conformément à JIS K1557-1.

4. Composition selon l'une quelconque des revendications 1 à 3, dans laquelle le composé d'alcool à base de polyester contient un polymère de condensation d'un acide carboxylique polyvalent et d'un alcool polyhydrique,
dans laquelle le nombre d'atomes de carbone par molécule de l'acide carboxylique polyvalent et le nombre d'atomes de carbone par molécule de l'alcool polyhydrique sont au total de 10 à 20.

5. Composition selon la revendication 4, dans laquelle l'acide carboxylique polyvalent est un acide dicarboxylique aliphatique constitué de 4 à 12 atomes de carbone.

6. Composition selon la revendication 4, dans laquelle l'alcool polyhydrique est un diol aliphatique constitué de 2 à 12 atomes de carbone.

7. Composition selon l'une quelconque des revendications 1 à 3, dans laquelle le composé d'alcool à base de polyester contient un polymère d'un acide hydroxycarboxylique ou d'un composé de lactone,
dans laquelle l'acide hydroxycarboxylique ou le composé de lactone a 2 à 10 atomes de carbone.

8. Composition selon l'une quelconque des revendications 1 à 3, dans laquelle le composé d'alcool à base de polyester contient un polymère de condensation d'un composé de carbonate et d'un alcool polyhydrique,
dans laquelle l'alcool polyhydrique est un diol aliphatique constitué de 2 à 12 atomes de carbone.

9. Composition selon l'une quelconque des revendications 1 à 8, dans laquelle le composé (I) a un poids moléculaire moyen en nombre basé sur l'indice d'hydroxyle de 200 à 2500, le poids moléculaire moyen en nombre basé sur l'indice d'hydroxyle étant une valeur obtenue en tant que 1000 $\times$ (le nombre de groupes hydroxyle par molécule de composé (I)) / ((l'indice d'hydroxyle du composé (I))/56.

10. Composition selon l'une quelconque des revendications 1 à 9, dans laquelle un mélange de X parties en masse du composé (I) et Y parties en masse du composé de diester (II) est un liquide homogène à 80 °C.

11. Feuille comprenant la composition selon l'une quelconque des revendications 1 à 10.

**12.** Film intermédiaire pour verre feuilleté, comprenant la feuille selon la revendication 11.

**13.** Film intermédiaire multicouche pour verre feuilleté, comprenant au moins une couche de la feuille selon la revendication 11.

**14.** Verre feuilleté comprenant le film intermédiaire pour verre feuilleté selon la revendication 12, ou le film intermédiaire multicouche pour verre feuilleté selon la revendication 13 entre une paire de plaques de verre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007331959 A
- JP 2007008798 A
- US 2009305058 A
- JP 2010059009 A